# EUROPEAN PATENT APPLICATION

(11) **EP 2 955 653 A1**
(43) Date of publication of application: **16.12.2015**
(21) Application number: 14172378.3
(22) Date of filing: 13.06.2014
(51) Int. Cl.: G06F 21/33

(54) **Method of verifying the authenticity of an electronic eid document**

(71) Applicant: Keesing Reference Systems BV, 1101 CB Amsterdam (NL)
(72) Inventor: Clerc, René, 1094 JL Amsterdam (NL)
(74) Representative: GIE Innovation Competence Group

(57) **Abstract**

The invention relates to a method of verifying the authenticity of an identity document (10), said identity document embedding a chip (11), said chip (11) storing a secondary certificate, said secondary certificate containing an identifier of a primary certificate,
comprising the steps of:
- reading (100) said chip (11) of said identity document (10), and
- extracting (110) said secondary certificate from said chip, and storing said secondary certificate in a memory.

It is essentially characterized in that it further comprises the steps of:
- extracting (120) said identifier from said secondary certificate,
- searching (140) said identifier in a database (40), each identifier recorded in said database being associated with a corresponding level of trust, said database (40) not recording the primary certificate corresponding to said secondary certificate, and
- retrieving (150) from said database the level of trust corresponding to said identifier.

## Description

### DOMAIN OF THE INVENTION

The present invention relates to the authentication of an identity document embedding a chip, hereafter "eID document".

The chip can be of the contact type, to be read with a reader in contact with the chip, for instance in contact-type smart cards; or the chip can be of the contactless type, such as RFID chips for instance. As the present invention is independent of the technology used to read a chip, for the sake of conciseness, the present description will only refer to a "chip".

An eID document is issued by an eID document issuer or an eID document issuing organization. For instance, an eID document issuer can be a library, a school/university and so on when the eID document is a for instance membership card; or an eID document issuer can be a state when the eID document is a driving licence, a passport including electronic passport ("epassport"), a seafarer's book, a visa, an electronic ID card, an electronic Residence Permit, all sort of Machine Readable Travel Document (eMRTD) and so on.

In an eID document, a chip is embedded. The chip comprises digital information relating to the identity of the holder / bearer of the eID document and the eID document itself. Typically, identity information is recorded both digitally in the chip and physically on or in the eID document in order to be visually controllable.

The authenticity of the content of the chip is essential as it can be considered a means of proof of the identity of the holder, for instance at a border control, when opening a bank account, changing job, checking in in a hotel, etc.

For the sake of conciseness, the present description will only describe an eID document containing a RFID chip that meets the International Civil Aviation Organization (ICAO) specifications. It is however clear that the scope of the present invention is not limited to this mere example.

A chip comprises a digital certificate, called Document Signer (secondary) certificate, which is issued by a certificate authority. A secondary certificate is created through a public digital certificate and is used to digitally sign the contents of the chip.

Verifying the authenticity of the contents of the chip in an eID document would normally require accessing to the public digital certificate that was used to create/generate the secondary certificate that is embedded in the chip.

However, for many eID documents issuing organizations, public certificates are in fact not made public, or are made public via non trusted ways. Accordingly, establishing the authenticity of the chip's contents can be very hard or sometimes even impossible.

The present invention aims to address this issue and aims to verify the authenticity of the content of the chip.

According to a first object of the present invention, the invention relates to a method of verifying the authenticity of an identity document, said identity document embedding a chip, said chip storing a secondary certificate, said secondary certificate containing an identifier of a primary certificate,
said method comprising the steps of:
- reading said chip of said identity document, and
- extracting said secondary certificate from said chip, and storing said secondary certificate in a memory.

It is essentially characterized in that it further comprises the steps of:
- extracting said identifier from said secondary certificate,
- searching said identifier in a database, each identifier recorded in said database being associated with a corresponding level of trust, said database not recording the primary certificate corresponding to said secondary certificate, and
- retrieving from said database the level of trust corresponding to said identifier.

In one embodiment, the method further comprises the steps of:
- assessing the physical integrity of said identity document, and
- incrementing a counter by a given value when the physical integrity of said identity document assessment is positive, said counter being accessible to said database, said level of trust depending on the value of said counter.

In one embodiment, the method further comprises the step of:
- scanning said identity document to produce at least one scanned image recorded in a memory, said scanning step comprising illuminating said identity document with at least one of the following light wavelength ranges:
   - visible light,
   - UV light, and
   - IR light, and
- comparing each of the at least one scanned image with a corresponding reference image.

In one embodiment, the method further comprises the step of:
- triggering an alarm when the physical integrity of said identity document assessment is negative.

In one embodiment, the method further comprises the step of attempting to retrieve from a source the primary certificate corresponding to said secondary certificate.

In one embodiment, the method further comprises the step of recording at least of the location where said chip is read and the date when said chip is read.

In one embodiment, the step of incrementing the counter by a given value comprises:
- incrementing the counter by a constant value, said constant given value possibly being 0 when none of the at least one scanned image matches a corresponding reference image, even if said identifier is recorded in said database; or
- incrementing the counter by a variable increment value, the value of which possibly depending on at least one of the following features:
- the number of checks performed in the checking step,
- the location where the identity document is checked, and
- the date when the identity document is checked.

In one embodiment, the method further comprises the step of comparing the value of the counter with a first threshold.

This enables to consider the identity document as genuine when the value of the counter is greater than or equal to the first threshold, or only when the value of the counter is greater than the first threshold.

In one embodiment, the method further comprises the steps of
- comparing the value of the counter with a first threshold and a second threshold;
- said database comprising pre-established categories, each category corresponding to whether the value of the counter is:
   o strictly lower than the first threshold;
   o comprised between the first threshold and the second threshold; or
   o strictly greater than the second threshold; and
- retrieving from the database the category corresponding to the value of the counter.

The level of trust retrieved can then be a category instead of a value. A category usually makes it easier for an operator to interpret a level of trust than a mere value. In particular, it is possible to assign each category with a corresponding colour. For instance, red when the value of the counter is lower than the first threshold; orange when comprised between the first threshold and the second threshold; and green when greater than the second threshold. The level of trust corresponding to a document signer certificate retrieved from the database is then just a colour that can be easily displayed on a display screen, typically as a flag, the interpretation of which being intuitive.

According to another object of the present invention, the invention relates to a computer program, comprising program instructions code to execute the method according to the invention when said computer program is executed on a computer.

Thanks to the present invention, it is possible to establish trust in a secondary certificate of an eID document based on crowd sourced collected information.

Whereby by the verification of an identity document is far from easy, it is now possible for any organization, from a government or not, having government checking means or not, to perform the verification of the secondary certificate of an eID document.

The trusted database can be mutualised for a plurality of chip reading devices spread throughout a plurality of locations.

Trust in an embedded secondary certificate can be assessed, even when no access to source of a primary certificate.

Other features and advantages of the present invention will appear in the detailed description that is given as a mere illustrative and non limitative example.

### DRAWINGS

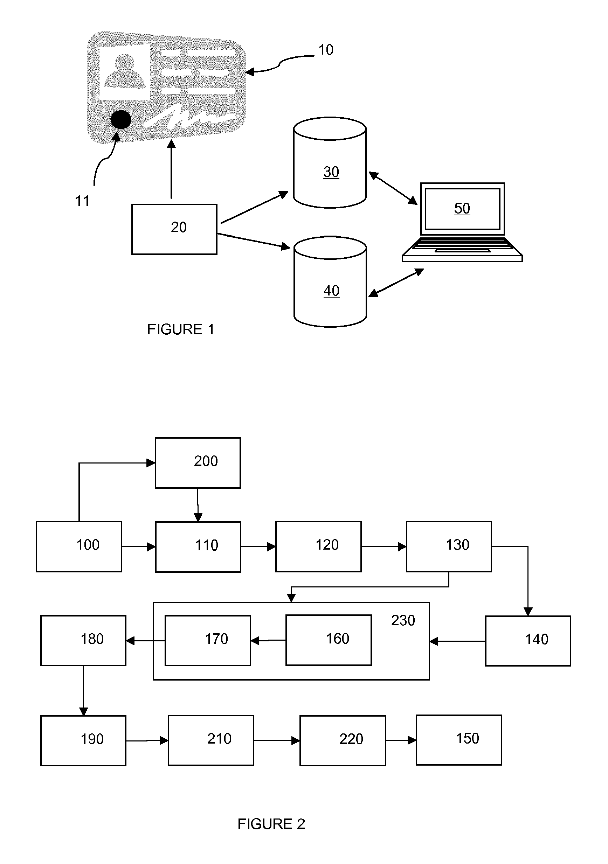

- figure 1 illustrates one embodiment of a system that is capable of implementing at least one embodiment of the method according to the invention, and
- figure 2 illustrates one embodiment of a method according to the invention.

### DETAILED DESCRIPTION

The security of the chip is based on Public Key cryptography.

Chips contain information. In the case of an ICAO-compliant chip, information is stored in data groups. Each data group comprises a set of data, and each set of data relates to one type of data. For instance, one data group comprises electronic data corresponding to the fingerprint of the bearer of the eID document, another data group comprises electronic data corresponding to the details of the bearer and of the document, another data group comprises electronic data corresponding to a photo of the bearer, and so on. Reference can be made for instance to the publication of the ICAO "Machine Readable Travel Documents", that can be found at http://www.icao.int/publications/Documents/9303 p1 v2 cons en.pd f

Reading access to some data relating to security features or identity features may be restricted, for instance such as biometric data.

According to the present invention, a chip contains an embedded certificate, for instance in a data group. It may also store a digital signature of the eID document, for instance in another data group, said digital signature being created with said embedded certificate. Said embedded certificate is called here "secondary certificate".

The secondary certificate is used to create said digital signature. Reading access to both the secondary certificate and the digital signature is not restricted.

Normally, data are recorded in a chip by an issuing authority of the eID document.

Normally, each issuing authority of eID document issues a primary certificate, which is valid for a given period of time, for instance 3 to 5 years.

Within that validity period, the primary certificate is used to create, indistinctively sign or generate, several secondary certificates, preferably one at a time. As a result, a secondary certificate normally contains an identifier of the primary certificate that has been used to create said secondary certificate.

In the case of an ICAO-compliant chip, primary certificates are called Country Signing Certificate Authority (CSCA) certificates; and the secondary certificate is called Document Signer certificate. It is clear however that the present invention is not restricted to ICAO-compliant chips and encompasses Document Signer certificates and CSCAs.

A given secondary certificate can be used to sign the contents of a chip and, in addition, can be stored on the chip itself.

One single secondary certificate is used to sign several chips, for instance up to several hundred thousands.

Accordingly, each embedded secondary certificate relates to a unique primary certificate, and several eID documents can comprise the same secondary certificate. Several identical secondary certificates all originate from the same primary certificate.

This means that in order to determine the authenticity of the contents of the chip, meaning the authenticity of the secondary certificate, an inspection system should have access to, or obtained, the primary certificate corresponding to said secondary certificates, via a trusted channel, to establish a link between the secondary certificate and the issuing authority.

Accordingly, when a primary certificate is not available, or when a primary certificate is available through a channel which can not be trusted, there is no way in which the authenticity of the secondary certificate that is stored on the chip can be established with a given level of trust.

The present invention aims to address this issue.

A first step is to provide an eID document 10.

To verify the authenticity of the eID document, the chip 11 of said eID document 10 is read 100 by a chip reading device 20, typically a chip reader. The chip reader is contact or contactless, depending on the chip.

It is possible to record 200 the location and the date the chip of said eID document is read.

The secondary certificate embedded in the chip is extracted 110 from the chip, and stored in a memory.

A step 130 of attempting to retrieve from a source 30 the primary certificate corresponding to said embedded secondary certificate can be performed.

Primary certificates are normally stored in at least a source 30, such as a public key directory, website(s), Master List(s), bilateral exchanges, etc.

Sources and access to such sources can be classified, each classification corresponding to a given level a trust. For instance a classification can be « class 1 », « class 2 » and « class 3 »; « class 1 » meaning a reliable source, « class 2 » an unknown reliability of the source and « class 3 » a none reliable source. It is then possible to grant a source with a corresponding level of trust.

In one embodiment, the attempt to retrieve the primary certificate is performed from several sources. Preferably, when several primary certificates are found in several sources (one primary certificate per source), a step of comparing said primary certificates is performed. If one of them is different, then the method can perform further steps.

Preferably, a step of recording from which source(s) a primary certificate is obtained is performed. Also preferably, a step of retrieving the classification of said source(s) is performed and the corresponding level of trust is assessed.

When the primary certificate is found in several sources, and at least one of said sources has a different category than the other ones, a warning can be triggered; a corresponding unique level of trust can be assessed based on a combination of the level of trust of each source.

If the primary certificate is obtained through multiple « class A » sources, it is a highly trusted certificate. If it has only been obtained from a doubtful website, for instance, it is not so trusted.

The secondary certificate carries in itself information by which primary certificate it was issued.

Using standard cryptographic means, it can be determined that the secondary certificate was actually issued by said primary certificate.

When the primary certificate corresponding to the embedded secondary certificate is not or can not be successfully retrieved from a trusted source, or is successfully retrieved from a non trusted source, it can be provided to search 140 or attempt to retrieve said identifier or a secondary certificate, hereafter "database certificate", from a trusted database 40. The database certificate is normally equal to the embedded secondary certificate.

In the database 40, each recorded identifier or database certificate is associated with a corresponding level of trust. If the database 40 contains both identifier and database certificate, then there exists a correspondence between a given identifier and a secondary certificate, so as to form a couple. Preferably, each couple is associated with only one level of trust.

A step 150 of retrieving from said database the level of trust corresponding to a given identifier or a given database certificate is performed, especially as described hereunder.

In addition to identifiers or database certificates, the database contains or is connected to a counter. Each identifier, each database certificate or each couple recorded in the database is related to an individual value of the counter.

Preferably, the database also contains information such as date(s) and location(s), for each identifier or each database certificate, to record where a given chip is read and the date when a given chip is read. Preferably, each identifier or each database certificate is related to at least one date, and to at least one location.

It can be provided to 230 assess the physical integrity of the eID document.

Typically, this step 230 is performed through checking the security features of the eID document. Preferably, the step 230 is performed based on scanned image(s) as described here under. Preferably, this step 230 is performed if said secondary certificate is not successfully retrieved from said database or if the level of trust granted to the source is not high enough, meaning lower than a predetermined value. When the result of this assessment is positive, the counter can be incremented by a given value and said secondary certificate can be recorded into said database.

Preferably, a step 160 of scanning the eID document is performed, typically with a scanner, to produce a scanned image.

At least one of the following embodiments can be performed.

In one embodiment, the step of scanning the eID document comprises scanning the eID document with visible light, typically within the range of 400 nm to 740 nm.

In one embodiment, the step of scanning the eID document comprises scanning the eID document with UV light (UV A or UV B), typically within the range of 200 nm to 400 nm.

In one embodiment, the step of scanning the eID document comprises scanning the eID document with IR light, typically within the range of 740 nm to 1100 nm.

The at least one scanned image is then checked. The checking step comprises a step 170 of comparing the at least one scanned image with at least one reference image. It can be performed by a remote operator or by software, with help of a computer 50. Accordingly, the authenticity and the integrity of the eID document are checked: any physical characteristic that could denote an attempt of tampering or any fraud is sought to be detected. Typically, the assessment is positive when no attempt of tampering or any fraud is detected.

Preferably, the result of the checking step is binary: the eID document is considered genuine or faked.

When the at least one scanned image corresponds with a reference image, the eID document is considered to be genuine. Accordingly, a step 180 of incrementing by an increment value the counter corresponding to the identifier or to the secondary certificate is performed.

This way, the level of trust of the database certificate is increased. The higher the level of trust, the more likely the embedded secondary certificate is genuine.

In one embodiment, the increment value is a constant.

In one embodiment, the increment value is variable. For instance, the value of the increment depends on at least one of the following features:
- the number of checks performed in the checking step,
- the location where the eID document is checked,
- the date when the eID document is checked.

When the eID document is considered to be faked, for instance because the at least one scanned image does not correspond with a reference image,; the counter corresponding to the secondary certificate is not incremented and an alarm can be triggered 190.

Preferably, the method further comprises the step 210 of comparing the value of the counter with a first threshold and considering the embedded secondary certificate as genuine only when the value of the counter is greater than the first threshold.

It is also possible to build several levels of trust for the embedded secondary certificate.

In that case for instance, the method further comprises the step 220 of comparing the value of the counter with a first threshold and a second threshold, and sorting the secondary certificate level of trust as belonging to a pre-established category upon the result of the comparison.

For instance:
- when the value of the counter is lower than the first threshold, the embedded secondary certificate is considered as belonging to a first category, for instance low level of trust;
- when the value of the counter is comprised between the first threshold and the second threshold, the embedded secondary certificate is considered as belonging to a second category, for instance fair level of trust; and
- when the value of the counter is higher than the second threshold, the embedded secondary certificate is considered as belonging to a third category, for instance high level of trust.

It is then possible to produce a signal corresponding to the category corresponding of the level of trust granted to the embedded secondary certificate. Each category can be represented on a display screen for instance by a number, a name or a colour.

When said secondary certificate is successfully retrieved from said database, the value of the counter or the level of trust is preferably also retrieved, and displayed.

In addition, it is possible to perform a step of checking the embedded digital signature of the eID document, by steps of computing a digital signature of the eID document with the embedded secondary certificate, and comparing said computed digital signature of the eID document with the embedded digital signature of the eID document.

A step of triggering a signal signalling that the primary certificate is not valid can be performed, for instance when the primary certificate is know to be revoked.

## Claims

1. Method of verifying the authenticity of an identity document (10), said identity document embedding a chip (11), said chip (11) storing a secondary certificate, said secondary certificate containing an identifier of a primary certificate,
said method comprising the steps of:
- reading (100) said chip (11) of said identity document (10), and
- extracting (110) said secondary certificate from said chip,
and storing said secondary certificate in a memory, **characterized in that**,
said method further comprises the steps of:
- extracting (120) said identifier from said secondary certificate,
- searching (140) said identifier in a database (40), each identifier recorded in said database being associated with a corresponding level of trust, said database (40) not recording the primary certificate corresponding to said secondary certificate, and
- retrieving (150) from said database the level of trust corresponding to said identifier.

2. Method according to claim 1, further comprising steps of:
- assessing (230) the physical integrity of said identity document, and
- incrementing (180) a counter by a given value when the physical integrity of said identity document assessment is positive, said counter being accessible to said database, said level of trust depending on the value of said counter.

3. Method according to any claim 2, further comprising the steps of:
- scanning (160) said identity document to produce at least one scanned image recorded in a memory, said scanning step comprising illuminating said identity document with at least one the following light wavelength ranges:
- visible light,
- UV light, and
- IR light; and
- comparing (170) each of the at least one scanned image with a corresponding reference image.

4. Method according to any of claims 2 or 3, further comprising the step of:
- triggering (190) an alarm when the physical integrity of said identity document assessment is negative.

5. Method according to any preceding claims, further comprising a step (130) of attempting to retrieve from a source (30) the primary certificate corresponding to said secondary certificate.

6. Method according to any of the preceding claims, further comprising the step (200) of recording at least of the location where said chip is read and the date when said chip is read.

7. Method according to any of claims 2 to 6, wherein the step (180) of incrementing the counter by a given value comprises:
- incrementing the counter by a constant value, said constant given value possibly being 0 when none of the at least one scanned image matches a corresponding reference image, even if said identifier is recorded in said database; or
- incrementing the counter by a variable increment value, the value of which possibly depending on at least one of the following features:
- the number of checks performed in the checking step,
- the location where the identity document is checked, and
- the date when the identity document is checked.

8. Method according to any of claims 2 to 7, further comprising the step (210) of comparing the value of the counter with a first threshold.

9. Method according to any of claims 2 to 8, further comprising the steps of:
- comparing (220) the value of the counter with a first threshold and a second threshold;
- said database comprising pre-established categories, each category corresponding to whether the value of the counter is:
- strictly lower than the first threshold;
- comprised between the first threshold and the second threshold; or
- strictly greater than the second threshold; and
- retrieving from the database the category corresponding to the value of the counter.

10. Computer program, comprising program instructions code to execute the method according to any preceding claims when said computer program is executed on a computer.

## Amended claims

### Amended claims in accordance with Rule 137(2) EPC.

1. Method of verifying the authenticity of an identity document (10), said identity document embedding a chip (11), said chip (11) storing a secondary certificate, said secondary certificate containing an identifier of a primary certificate,
said method comprising the steps of:
- reading (100) said chip (11) of said identity document (10), and
- extracting (110) said secondary certificate from said chip, and storing said secondary certificate in a memory,
- extracting (120) said identifier from said secondary certificate,
- searching (140) said identifier in a database (40), each identifier recorded in said database being associated with a corresponding level of trust, said database (40) not recording the primary certificate corresponding to said secondary certificate, and
- retrieving (150) from said database the level of trust corresponding to said identifier,
**characterized in that** said method further comprises the steps of:
- assessing (230) the physical integrity of said identity document, and
- incrementing (180) a counter by a given value when the physical integrity of said identity document assessment is positive, said counter being accessible to said database, said level of trust depending on the value of said counter.

2. Method according to claim 1, further comprising the steps of:
- scanning (160) said identity document to produce at least one scanned image recorded in a memory, said scanning step comprising illuminating said identity document with at least one the following light wavelength ranges:
- visible light,
- UV light, and
- IR light; and
- comparing (170) each of the at least one scanned image with a corresponding reference image.

3. Method according to any of claims 1 or 2, further comprising the step of:
- triggering (190) an alarm when the physical integrity of said identity document assessment is negative.

4. Method according to any preceding claims, further comprising a step (130) of attempting to retrieve from a source (30) the primary certificate corresponding to said secondary certificate.

5. Method according to any of the preceding claims, further comprising the step (200) of recording at least of the location where said chip is read and the date when said chip is read.

6. Method according to any of the preceding claims, wherein the step (180) of incrementing the counter by a given value comprises:
- incrementing the counter by a constant value, said constant given value possibly being 0 when none of the at least one scanned image matches a corresponding reference image, even if said identifier is recorded in said database; or
- incrementing the counter by a variable increment value, the value of which possibly depending on at least one of the following features:
- the number of checks performed in the checking step,
- the location where the identity document is checked, and
- the date when the identity document is checked.

7. Method according to any of the preceding claims, further comprising the step (210) of comparing the value of the counter with a first threshold.

8. Method according to any of the preceding claims, further comprising the steps of:
- comparing (220) the value of the counter with a first threshold and a second threshold;
- said database comprising pre-established categories, each category corresponding to whether the value of the counter is:
- strictly lower than the first threshold;
- comprised between the first threshold and the second threshold; or
- strictly greater than the second threshold; and
- retrieving from the database the category corresponding to the value of the counter.

9. Computer program, comprising program instructions code to execute the method according to any preceding claims when said computer program is executed on a computer.
